# FASCICULE DE BREVET EUROPEEN

(11) **EP 0 865 900 B1**
(45) Date de publication et mention de la délivrance du brevet: **12.06.2002**
(21) Numéro de dépôt: 98400530.6
(22) Date de dépôt: 06.03.1998
(51) Int. Cl.: B29C 70/44, B29C 70/48

(54) **Procédé de fabrication d'une pièce de grandes dimensions en matériau composite et pale d'hélice, en particulier d'éolienne, fabriqué selon ce procédé**
Verfahren zur Herstellung von grossen Verbundkörpern und nach diesem Verfahren hergestelltes Luftschraubenblatt, insbesondere für Windmühlen
Process for manufacturing large size articles from composite material and propeller blade, namely for windmills, produced using such a method

(30) Priorité: 12.03.1997 FR 9702919
(43) Date de publication de la demande: 23.09.1998
(73) Titulaire: Alternatives Energies, 17000 La Rochelle (FR)
(72) Inventeur: Pallu De La Barriere, Philippe, 17000 La Rochelle (FR)
(74) Mandataire: Ramey, Daniel

(56) Documents cités:
- EP-A- 0 138 294
- EP-A- 0 358 510
- EP-A- 0 465 169
- US-A- 4 445 951
- US-A- 5 037 599
- US-A- 5 318 742
- US-A- 5 462 408
- US-A- 5 638 870
- PATENT ABSTRACTS OF JAPAN vol. 016, no. 534 (M-1334), 4 novembre 1992 & JP 04 201241 A (TOYOBO CO LTD), 22 juillet 1992,
- DATABASE WPI Derwent Publications Ltd., London, GB; AN 94-300296 XP002044034 & JP 06 228 837 A (TOYOBO K. K.) , 16 août 1994

## Description

L'invention concerne un procédé de fabrication d'une pièce de grandes dimensions en matériau composite, telle qu'une pale d'hélice, et en particulier une pale d'éolienne.

L'invention concerne également, de façon générale, toutes les pièces en matériau composite fabriquées par exécution de ce procédé et notamment des pièces tubulaires ou non tubulaires telles que des poutres, des ailes et des mâts, de grandes dimensions.

De telles pièces sont difficiles, voire presque impossibles à réaliser par des procédés classiques de moulage par injection, le remplissage d'une cavité de moulage de grande longueur (par exemple de plus de 10 mètres) par une matière plastique injectée posant de sérieux problèmes techniques et nécessitant un outillage d'injection trop coûteux lorsqu'il s'agit de fabrications en petite série.

C'est pour cette raison qu'on a réalisé jusqu'à présent des pièces de grande taille, telles que des pales d'éolienne par exemple, par un procédé de moulage consistant à déposer dans un moule des couches successives de résine sur des couches successives de tissu de fibres de verre ou analogue, chaque couche de résine devant être polymérisée (à froid, au moyen d'un catalyseur) avant le dépôt de la couche suivante de résine, en raison du dégagement de chaleur provoqué par la polymérisation de la résine. Cela oblige par exemple à déposer et à polymériser 10 couches de résine d'une épaisseur de 5 mm pour former une paroi d'une épaisseur de 50 mm. Dans ces conditions, la fabrication d'une pale d'éolienne de grande longueur (de 15 à 35 m environ) peut immobiliser un moule pendant 3 à 4 semaines.

De plus, si on utilise une résine bon marché telle qu'une résine polyester, il faut protéger le personnel contre les vapeurs toxiques dégagées par la résine pendant la fabrication de la pièce. On peut bien entendu utiliser une résine epoxy à la place d'une résine polyester pour supprimer les risques de pollution et de toxicité, mais au détriment du prix de revient, le coût des résines epoxy étant environ 5 fois plus élevé que celui des résines polyester.

Il est déjà connu, par exemple par le brevet US 5 037 599, de réaliser une pièce en matériau composite à partir d'un tissu de fils constitués d'un mélange de fibres de thermoplastique et de fibres de renforcement, ce tissu étant posé ou drapé dans un moule et thermoformé par application de chaleur et de pression, la chaleur faisant fondre le thermoplastique du tissu, et la pression le plaquant sur la paroi du moule. Toutefois, ce procédé connu ne permet pas la fabrication de pièces tubulaires.

Un procédé selon le préambule de la revendication 1, utilisant notamment une enveloppe gonflable pour la fabrication de pièces tubulaires, est comme du document JP-A-04 201 241.

L'invention a notamment pour but d'éviter les inconvénients des procédés connus.

Elle a pour objet un procédé qui permette de fabriquer des pièces de grandes dimensions en trois à quatre fois moins de temps environ que les procédés précités, pour sensiblement le même prix que des pièces en résine polyester, mais sans aucun risque de pollution ou de toxicité.

Elle propose, à cet effet, un procédé de fabrication d'une pièce en matériau composite, consistant à disposer dans un moule au moins une épaisseur d'un tissu de fils formés de fils ou de fibres de matière thermoplastique et de fils ou de fibres de renforcement, à placer une enveloppe gonflable sur le tissu dans le moule, à fermer le moule et à gonfler l'enveloppe pour plaquer le tissu sur la paroi du moule, à chauffer l'ensemble du moule et du tissu sous pression jusqu'à la température de fusion de la matière thermoplastique pour imprégner de cette matière les fils ou fibres de renforcement, à laisser refroidir et à démouler, caractérisé en ce que le moule étant réalisé en deux parties dont l'une est rabattable sur l'autre, on dispose le tissu à l'intérieur de chacune des parties du moule, on place un film de la matière thermoplastique précitée sur le tissu dans la partie rabattable du moule, on plaque le film et le tissu sur la paroi de cette partie du moule par aspiration ou dépression, on rabat cette partie sur l'autre partie du moule et on chauffe sous pression comme précité.

On peut obtenir ainsi une pièce tubulaire de grandes dimensions en une seule opération de moulage et de chauffage, contrairement à la technique antérieure où il fallait procéder couche par couche.

Par ailleurs, on n'a pas à polymériser la matière plastique au cours de ce procédé, il suffit de chauffer une matière thermoplastique déjà polymérisée.

Selon encore une autre caractéristique de l'invention, on réalise le chauffage sous pression, dans une enceinte fermée qu'on alimente en gaz chaud sous pression (par exemple vapeur d'eau surchauffée ou air chaud sous pression).

Le moule étant ouvert à l'une de ses extrémités longitudinales, la même pression régne à l'intérieur et à l'extérieur du moule et permet de répartir de façon homogène la matière plastique fondue autour des fils ou des fibres de renforcement et de réaliser une matrice homogène de matière plastique enrobant complètement les fils ou fibres de renforcement.

Selon une autre caractéristique avantageuse de l'invention, la matière plastique précitée est du polypropylène qui a l'avantage d'être bon marché et de ne pas dégager de gaz polluant ou nocif lorsqu'il est chauffé et fondu.

L'invention propose également une pale d'hélice, telle en particulier qu'une pale d'éolienne, réalisée en deux parties, une partie avant ou amont et une partie arrière ou aval par rapport au sens de l'écoulement de fluide sur la pale quand elle est mise en rotation, ces deux parties étant réalisées par exécution du procédé décrit dans ce qui précède et fixées l'une sur l'autre par collage.

Dans un mode de réalisation préféré de l'invention, la partie avant de la pale est en forme de caisson à section transversale fermée, et sa partie arrière est à section transversale ouverte, sensiblement en forme de V.

Une pale d'éolienne selon l'invention peut avoir une longueur de 15 à 35 mètres environ et est fabriquée en une semaine environ, c'est-à-dire en 3 à 4 fois moins de temps que dans la technique antérieure. Elle peut en outre être réalisée en une matière thermoplastique bon marché, sans risque de pollution et de toxicité pour le personnel travaillant à la fabrication.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe transversale d'une pale d'éolienne selon l'invention ;
- la figure 2 représente schématiquement une première étape du procédé de moulage de la partie avant de la pale de la figure 1;
- la figure 3 représente schématiquement une deuxième étape de ce procédé;
- la figure 4 est une vue schématique en coupe longitudinale d'une extrémité de la pale de la figure 1, comportant une bride de fixation sur un rotor.

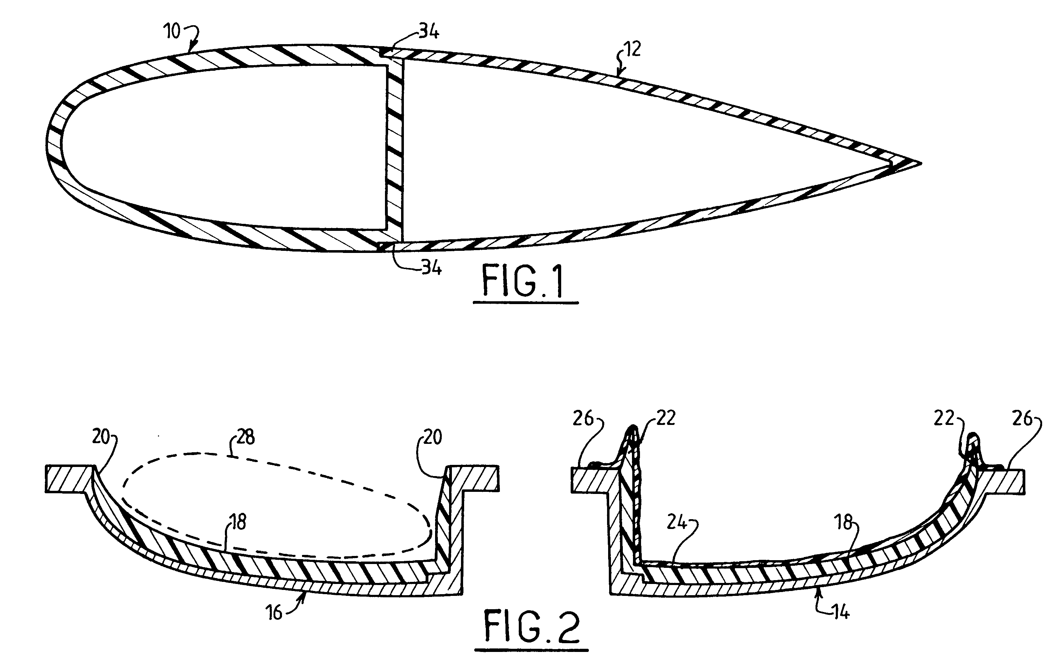

On se réfère d'abord à la figure 1, qui est une vue en coupe transversale d'une pale d'éolienne selon l'invention.

Cette pale est formée de deux parties 10 et 12, la partie avant 10 ou partie amont par rapport au sens de l'écoulement de fluide sur la pale quand elle mise en rotation, étant en forme de caisson à section transversale fermée, tandis que la partie arrière 12 ou partie aval par rapport au sens de l'écoulement de fluide est sensiblement en forme de V en section transversale et constitue un carénage que l'on vient fixer par collage sur la face arrière ou face aval de la partie avant 10.

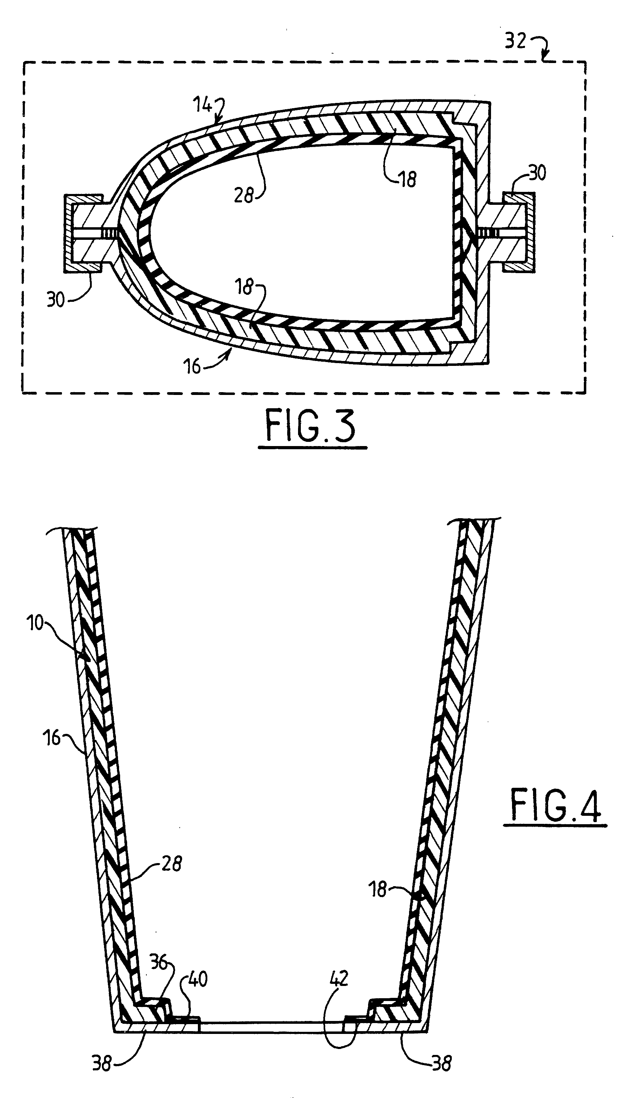

Les deux parties 10 et 12 sont fabriquées en matière composite conformément au procédé selon l'invention dont les caractéristiques essentielles vont maintenant être décrites en référence aux figures 2 et 3, pour la fabrication de la partie avant 10 de la pale.

On utilise dans le procédé selon l'invention un moule en deux parties 14, 16 (figure 2) dont l'une 14 est destinée à être rabattue sur l'autre 16, des moyens de manipulation (non représentés) étant prévus à cet effet.

Dans une première étape du procédé selon l'invention, les deux parties de moule 14, 16 sont dans la position représentée en figure 2, leur paroi interne étant orientée vers le haut, pour que l'on dépose à l'intérieur de chaque partie de moule une ou plusieurs couches d'un tissu souple dont les fils sont constitués d'un mélange de fils ou de fibres de matière plastique et de fils ou de fibres de renforcement, tels que des fibres de verre de préférence.

Un tel tissu est actuellement disponible sur le marché, et est constitué de fils formés d'un mélange de fils ou de fibres de polypropylène et de fils ou des fibres de verre, ce tissu se présentant sous la forme d'une nappe de fils tissés et étant également disponible en multiplis.

On dispose donc une ou plusieurs couches de ce tissu 18 à l'intérieur de chaque partie de moule 14, 16, le nombre de couches de tissu dépendant de l'épaisseur désirée de la paroi de la pièce à fabriquer, les couches de tissu 18 s'arrêtant au niveau des bords supérieurs de la partie 16 de moule et étant amincies au niveau de ces bords comme représenté en 20. Dans la partie rabattable 14 du moule, on laisse dépasser les bords des couches de tissu 18 au-delà des bords de la partie 14 de moule, en amincissant ces bords dépassants comme représenté en 22, puis on dépose sur les couches de tissu 18 un film 24 de la même matière thermoplastique que celle utilisée dans le tissu (du polypropylène), ce film 24 recouvrant les couches de tissu 18 déposées dans la partie de moule 14, les bords dépassants 22 de ces couches de tissu et les bords supérieurs 26 de la partie de moule 14.

Par aspiration, on crée une dépression entre la paroi interne du moule 14 et le film 24, ce qui a pour effet de plaquer les couches de tissu 18 et le film 24 sur la paroi interne de la partie de moule 14 et de rigidifier les bords 22 des couches de tissu 18.

On dispose ensuite dans la partie de moule 16, sur les couches de tissu 18, une enveloppe ou vessie gonflable 28 réalisée en une matière élastiquement déformable et extensible telle qu'un élastomère (par exemple un silicone) présentant des caractéristiques souhaitées de résistance mécanique et de tenue en température.

Un mandrin ou un noyau quelconque (non représenté) peut être placé à l'intérieur de cette enveloppe ou vessie 28, pour éviter son affaissement complet lorsqu'elle est disposée sur le tissu 18 de la seconde partie de moule 16.

Le moule est ensuite fermé, par rabattement de la partie 14 sur la partie 16, les rebords 26 des deux parties de moule étant maintenus appliqués l'un sur l'autre comme représenté en figure 3 par des moyens de tout type approprié, tels que ceux schématisés en 30.

A cette occasion, l'enveloppe 28 peut être gonflée au moins partiellement, pour maintenir les couches de tissu 18 en place à l'intérieur des parties de moule 14, 16.

Ensuite, le moule est amené dans une enceinte de chauffage et de cuisson 32 du type autoclave pour soumettre à un chauffage sous pression la matière thermoplastique du tissu 18 et du film 24.

On précisera, à titre d'exemple, que la température et la pression à l'intérieur de l'enceinte 32 peuvent être de l'ordre de 170°C et de 2 bars respectivement, cette température étant suffisante pour provoquer la fusion du polypropylène, la pression répartissant le polypropylène fondu autour des fils ou des fibres de verre du tissu 18.

La durée de séjour du moule 14, 16 dans l'enceinte 32 est par exemple de l'ordre de 5 heures. Le chauffage de cette enceinte peut être réalisé avec de la vapeur d'eau surchauffée ou bien avec de l'air chaud, la pression étant alors fournie par un compresseur externe à l'enceinte 32. Ce gaz sous pression sert aussi à gonfler l'enveloppe 28.

Des trous d'évent sont formés dans les parties 14, 16 du moule pour permettre l'expulsion de l'air emprisonné dans le tissu 18.

Il suffit ensuite de sortir le moule 14, 16 de l'enceinte 32, de laisser refroidir jusqu'à une température de l'ordre de 40°C, et d'ouvrir le moule pour démouler la partie avant 10 ou partie amont de la pale d'éolienne.

Les bords en saillie 22 des couches de tissu 18 de la partie de moule 14 ont été appliqués et soudés sur les bords amincis 20 des couches de tissu 18 de la partie de moule 16 et ont réalisé automatiquement la soudure des deux moitiés de la partie avant 10 de la pale.

En variante, on peut ne pas former de bords en saillie 22 sur les couches de tissu 18 de la partie de moule 14 et utiliser à la place une bande du tissu 18 qui s'étend sur toute la périphérie de la jonction entre les deux moitiés de la partie avant 10 de la pale et qui est appliquée sur des bords amincis des couches de tissu 18, en étant maintenue en place par le film 24 et l'enveloppe gonflable 28.

Cette partie avant 10 est donc moulée d'une seule pièce et présente de ce fait des caractéristiques mécaniques notablement supérieures à celles des pales d'éolienne que l'on fabriquait selon les procédés de la technique antérieure décrits dans ce qui précède.

La partie arrière ou partie aval 12 de la pale est fabriquée de la même façon :

On dispose des couches de tissu 18 dans un moule à section transversale en V, on place une vessie gonflable en silicone dans ce moule, on le ferme au moyen d'une paroi rapportée et on le place dans l'enceinte 32 pour la fusion du polypropylène et l'imprégnation des fils ou des fibres de verre par le polypropylène fondu.

L'assemblage des deux parties 10 et 12 est réalisé par collage, à température ambiante, les bords arrière de la partie amont 10 présentant de moulage un décrochement formant logement des bords avant 34 (figure 1) de la partie aval 12.

La pale d'éolienne ainsi réalisée peut avoir une longueur comprise entre 15 et 35 mètres environ et un poids de plusieurs tonnes. L'épaisseur de sa paroi est typiquement de 50 mm environ.

Pour sa fixation sur un rotor d'éolienne, une extrémité de la partie avant 10 est réalisée (figure 4) de moulage avec une bride annulaire 36 formée par un rebord annulaire des couches de tissu 18 plaquées contre un rebord annulaire 38 des parties de moule 14, 16, l'enveloppe ou vessie gonflable 28 présentant également un rebord annulaire 40 plaqué sur le rebord annulaire 38 des parties de moule 14 et 16, avec interposition d'une matière d'étanchéité 42 entre les rebords 38 et 40 précités.

Après démoulage, il suffit de percer des trous dans le rebord 36 de la partie avant 10 de la pale pour fixer celle-ci au moyen de boulons sur le rotor de l'éolienne.

On évite ainsi l'usage d'une bride métallique indépendante qu'il faudrait fixer par collage sur l'extrémité de la pale.

Bien entendu, l'invention est applicable non seulement à la fabrication de pales d'éolienne comme décrit et représenté, mais également à la fabrication de toutes pièces en matière composite et présente de sérieux avantages par rapport aux techniques concurrentes dans le cas de fabrication de petites séries.

## Revendications

1. Procédé de fabrication d'une pièce en matériau composite, en particulier d'une pièce de grandes dimensions à section transversale ouverte ou fermée, consistant à disposer dans un moule (14, 16) au moins une épaisseur d'un tissu (18) dont les fils sont constitués d'un mélange de fils ou de fibres de matière thermoplastique et de fils ou de fibres de renforcement, à placer une enveloppe gonflable (28) sur le tissu (18) dans le moule (14, 16), à fermer le moule et à gonfler au moins partiellement ladite enveloppe pour plaquer le tissu (18) sur la paroi du moule (14, 16), à chauffer l'ensemble moule-tissu sous pression jusqu'à la température de fusion de la matière thermoplastique pour imprégner de cette matière les fils ou fibres de renforcement, à laisser refroidir et à démouler, **caractérisé en ce que**, le moule étant réalisé en deux parties dont l'une (14) est rabattable sur l'autre (16), on dispose le tissu à l'intérieur de chacune des parties du moule, on place un film (24) de la matière thermoplastique précitée sur le tissu (18) dans la partie rabattable (14) du moule, on plaque le film et le tissu sur la paroi de cette partie du moule par aspiration ou dépression, on rabat cette partie (14) sur l'autre partie du moule et on chauffe sous pression comme précité.

2. Procédé selon la revendication 1, **caractérisé en ce qu'**on réalise le chauffage sous pression, dans une enceinte fermée (32) alimentée en gaz chaud sous pression, et on fait régner la même pression et la même température à l'intérieur et à l'extérieur du moule (14, 16).

3. Procédé selon la revendication 1 ou 2, **caractérisé en ce que**, dans une des parties (14, 16) du moule, on fait dépasser une bande (22) de tissu hors du moule, on ferme le moule et on applique cette bande (22) sur le tissu (18) disposé dans l'autre partie du moule, par gonflage de l'enveloppe (28).

4. Procédé selon la revendication 1 ou 2, **caractérisé en ce que**, dans une des parties (14, 16) du moule, on dispose une bande de tissu (18) sur les bords des couches de tissu (18) placées dans cette partie du moule en laissant dépasser cette bande, on ferme le moule et on applique cette bande de tissu sur le tissu disposé dans l'autre partie du moule, par gonflage de l'enveloppe (28).

5. Procédé selon une des revendications 2 à 4, **caractérisé en ce qu'**on gonfle l'enveloppe (28) au moyen du gaz chaud sous pression alimentant l'enceinte (32).

6. Procédé selon l'une des revendications précédentes, **caractérisé en ce que** la matière thermoplastique du tissu (18) est du polypropylène.

7. Pale d'hélice, en particulier pale d'éolienne, réalisée en deux parties, une partie avant (10) ou partie amont et une partie arrière (12) ou partie aval par rapport au sens de l'écoulement de fluide sur la pale quand elle est mise en rotation, ces deux parties étant fabriquées par exécution du procédé décrit dans l'une des revendications précédentes et fixées l'une sur l'autre par collage.

8. Pale selon la revendication 7, **caractérisée en ce que** sa partie avant (10) est en forme de caisson à section transversale fermée.

9. Pale selon la revendication 7 ou 8, **caractérisée en ce que** sa partie arrière (12) est à section transversale ouverte, sensiblement en V.

10. Pale selon l'une des revendications 7 à 9, **caractérisée en ce qu'**elle comprend de moulage, à une extrémité, une bride (36) de fixation sur un rotor, cette bride étant formée par un rebord du tissu (18) précité.

## Claims

1. A method of making a part out of composite material, in particular a part of large dimensions and of cross-section that is open or closed, the method consisting in placing in a mold (14, 16) at least one thickness of cloth (18) made up of threads constituted by a mixture of fibers or threads of thermoplastic material and of reinforcing fibers or threads, in placing an inflatable envelope (28) on the cloth (18) in the mold (14, 16), in closing the mold and inflating said envelope, at least in part, to press the cloth (18) against the wall of the mold (14, 16), in heating the mold-plus-cloth together under pressure up to the melting temperature of the thermoplastic material to embed the reinforcing fibers or threads in said material, in allowing it to cool, and in unmolding, the method being **characterized in that** the mold is made of two mold portions, comprising a first portion (14) that can be shut down on a second portion (16), the cloth is placed inside each of the mold portions, a film (24) of the above-mentioned thermoplastic material is placed on the cloth (18) in the first mold portion (14) which is suitable for shutting down on the second mold portion, with the film and the cloth being pressed against the wall of said mold portion by pressure reduction or suction, said first mold portion (14) is closed down on the second mold portion, and the above-mentioned heating under pressure is performed.

2. A method according to claim 1, **characterized in that** the heating under pressure is performed in a closed enclosure (32) fed with hot gas under pressure, and the same pressure and temperature are caused to obtain both inside and outside the mold (14, 16).

3. A method according to claim 1 or 2, **characterized in that**, in one of the portions (14, 16) of the mold a strip of cloth (22) is caused to project beyond the mold, the mold is closed, and said strip (22) is pressed against the cloth (18) placed in the other portion of the mold by inflating the envelope (28).

4. A method according to claim 1 or 2, **characterized in that** a strip of cloth (18) is placed on the edges of the layers of cloth (18) placed in one of the portions of the mold (14, 16) so that said strip projects therefrom, the mold is closed, and said strip of cloth is pressed against the cloth placed in the other portion of the mold by inflating the envelope (28).

5. A method according to any one of claims 2 to 4, **characterized in that** the envelope (28) is inflated by means of the hot gas under pressure fed into the enclosure (32).

6. A method according to any preceding claim, **characterized in that** the thermoplastic material of the cloth (18) is polypropylene.

7. A propeller blade, in particular a wind turbine blade, made in two parts, a leading or "upstream" part (10) and a trailing or "downstream" part (12) relative to the direction of fluid flow over the blade when it is in rotation, said two parts being made by performing the method of any preceding claim, and being fixed together by adhesive.

8. A blade according to claim 7, **characterized in that** its leading portion (8) is in the form of a box section member of closed cross-section.

9. A blade according to claim 7 or 8, **characterized in that** the trailing portion (12) of the blade is of open, substantially V-shaped cross-section.

10. A blade according to any one of claims 7 to 9, **characterized in that** it is integrally molded at one end with a flange (36) for fixing to a rotor, said flange being formed by a rim of the above-mentioned cloth (18).

## Patentansprüche

1. Verfahren zur Herstellung eines Verbundmaterial-Bauteils, insbesondere eines Bauteils mit großen Abmessungen und mit offenem oder geschlossenem Querschnitt, das folgende Schritte aufweist:
Anordnen von zumindest einer Schicht eines Gewebes (18), dessen Fäden aus einer Mischung von Fäden oder Fasern aus thermoplastischem Material und von Verstärkungsfäden oder -fasern besteht, in einer Form (14, 16),
Aufbringen einer aufblasbaren Hülle (28) auf das Gewebe (18) in der Form (14, 16),
Schließen der Form und zumindest teilweises Aufblasen der Hülle, um die Wand der Form (14, 16) mit dem Gewebe (18) zu überdecken,
Erwärmen der Baugruppe aus Form und Gewebe unter Druck bis zur Schmelztemperatur des thermoplastischen Materials, um die Verstärkungsfäden oder -fasern mit diesem Material zu imprägnieren,
Erkalten-lassen und Aus-der-Fom-nehmen,
**dadurch gekennzeichnet, daß**
die Form als zwei Teile umgesetzt ist, von denen der eine (14) auf den anderen (16) klappbar ist,
das Gewebe im Inneren von jedem der Teile der Form vorgesehen wird,
eine Folie (24) aus dem vorstehenden thermoplastischen Material im klappbaren Teil (14) der Form auf dem Gewebe (18) angeordnet wird,
die Wand dieses Teils der Form durch Ansaugen oder Unterdruck mit der Folie und dem Gewebe überzogen wird,
dieser Teil (14) auf den anderen Teil der Form geklappt wird, und
ein Erwärmen unter Druck gemäß vorbeschreibung erfolgt.

2. Verfahren nach Anspruch 1, **dadurch gekennzeichnet, daß** die Erwärmung unter Druck in einer geschlossenen Umhüllung (32) umgesetzt wird, der Warmgas unter Druck zugeführt wird, und daß im Inneren der Form (14, 16) und außerhalb von dieser der gleiche Druck und die gleiche Temperatur vorherrschen.

3. Verfahren nach einem der Ansprüche 1 und 2, **dadurch gekennzeichnet, daß** in einem der Teile (14, 16) der Form ein Streifen (22) des Gewebes aus der Form hervorstehen gelassen wird, die Form geschlossen wird und dieser Streifen (22) auf das Gewebe (18), das sich im anderen Teil der Form befindet, durch Aufblasen der Hülle (28) aufgebracht wird.

4. Verfahren nach einem der Ansprüche 1 und 2, **dadurch gekennzeichnet, daß** in einem der Teile (14, 16) der Form ein Streifen des Gewebes (18) auf den Kanten der Schichten des Gewebes (18), die sich in diesem Teil der Form befinden, angeordnet wird, wobei dieser Streifen hervorstehen gelassen wird, die Form geschlossen wird und dieses Gewebe auf das Gewebe, das sich im anderen Teil der Form befindet, durch Aufblasen der Hülle (28) aufgebracht wird.

5. Verfahren nach einem der Ansprüche 2 bis 4, **dadurch gekennzeichnet, daß** die Hülle (28) mittels Warmgas unter Druck, das der Umhüllung (32) zugeführt wird, aufgeblasen wird.

6. Verfahren nach einem der vorhergehenden Ansprüche, **dadurch gekennzeichnet, daß** das thermoplastische Material des Gewebes (18) aus Polypropylen ist.

7. Schraubenblatt, insbesondere ein Blatt für eine Windkraftanlage, aus zwei Teilen, einem vorderen Teil (10) oder stromaufwärts liegenden Teil und einem hinteren Teil (12) oder stromabwärts liegenden Teil bezüglich der Strömungsrichtung des Fluids auf das Blatt, wenn dieses in Rotation versetzt wird, wobei diese zwei Teile durch die Ausführung des Verfahrens, das in einem der vorhergehenden Ansprüche beschrieben ist, hergestellt werden und durch Kleben aneinander befestigt werden.

8. Blatt nach Anspruch 7, **dadurch gekennzeichnet, daß** der vordere Teil (10) die Form eines Senkkastens mit geschlossenem Querschnitt hat.

9. Blatt nach Anspruch 7 oder 8, **dadurch gekennzeichnet, daß** der hintere Teil (12) einen offenen Querschnitt mit im wesentlichen V-Form hat.

10. Blatt nach einem der Ansprüche 7 bis 9, **dadurch gekennzeichnet, daß** dieses das Formen von einem Flansch (36) an einem Endabschnitt von diesem zum Befestigen an einem Rotor aufweist, wobei der Flansch durch einen Rand des vorstehenden Gewebes (18) gebildet ist.
